# FASCICULE DE BREVET EUROPEEN

(11) **EP 3 678 157 B1**
(45) Date de publication et mention de la délivrance du brevet: **06.10.2021**
(21) Numéro de dépôt: 19219731.7
(22) Date de dépôt: 26.12.2019
(51) Int. Cl.: H01H 25/06

(54) **APPAREIL ÉLECTROMENAGER MUNI D'UN DISPOSITIF DE COMMANDE AMELIORÉ**
ELEKTROHAUSHALTSGERÄT, DAS MIT EINER VERBESSERTEN STEUERUNGSVORRICHTUNTG AUSGESTATTET IST
HOUSEHOLD APPLIANCE EQUIPPED WITH AN IMPROVED CONTROL DEVICE

(30) Priorité: 04.01.2019 FR 1900093
(43) Date de publication de la demande: 08.07.2020
(73) Titulaire: SEB S.A., 69130 Ecully (FR)
(72) Inventeur: MAIRE-PETRELLI, Stéphan, 21490 BELLEFOND (FR)
(74) Mandataire: SEB Développement

(56) Documents cités:
- EP-B1- 1 395 156
- WO-A1-2012/084627
- CN-U- 201 859 797
- DE-U1-202008 006 988
- ES-U- 1 068 650
- GB-A- 2 494 420

## Description

La présente invention concerne un dispositif de commande d'un appareil électroménager, notamment pour réaliser la cuisson d'un aliment.

Le document WO 2012/084627 A1 concerne un appareil électroménager, un lave-linge avec panneau de commande, comprenant un dispositif de commande comportant une couronne mobile en rotation autour d'un axe et un bouton poussoir qui est uniquement mobile le long de l'axe et qui est agencé dans la couronne.

On connait du document CN201859797 un dispositif de commande d'un appareil électroménager, notamment un gril viande, comportant une couronne mobile en rotation autour d'un axe Δ, un bouton poussoir qui est mobile le long de l'axe Δ et qui est agencé dans la couronne, un composant de détection d'une position angulaire de la couronne mobile et un composant de détection d'une poussée exercée sur le bouton poussoir. Le bouton poussoir comporte un organe d'appui accessible par un utilisateur, une face d'appui coopérant avec le composant de détection d'une poussée exercée sur le bouton poussoir et un bras qui relie l'organe d'appui à la face d'appui. Le dispositif comporte un circuit électronique qui commande la température de grillage de la viande en fonction des signaux fournis par le composant de détection de la position angulaire de la couronne mobile et qui commande l'arrêt d'un cycle de grillage en fonction du signal fourni par le composant de détection d'une poussée exercée sur le bouton poussoir. Dans ce dispositif de commande, le bouton poussoir est entrainé en rotation lorsque la couronne est manœuvrée. Ainsi, un marquage réalisé sur le bouton poussoir, par exemple « stop », sera difficile à lire pour un utilisateur dans certaines positions de la couronne.

De plus, le dispositif de commande comporte de nombreuses pièces. Ainsi, un tel dispositif de commande présente une conception complexe et chère à mettre en oeuvre.

Le but de la présente invention est de remédier aux inconvénients précités et de proposer un appareil électroménager comportant un dispositif de commande qui présente une ergonomie améliorée.

Un autre but de l'invention est de proposer un appareil électroménager comportant un dispositif de commande qui soit de conception simple et économique à mettre en œuvre.

Ces buts sont atteints avec un appareil électroménager comprenant un dispositif de commande comportant une couronne mobile en rotation autour d'un axe Δ, un bouton poussoir qui est mobile le long de l'axe Δ et qui est agencé dans la couronne, un composant de détection d'une position angulaire de la couronne muni d'un arbre mobile en rotation et un composant de détection d'une poussée exercée sur le bouton poussoir, ledit bouton poussoir comportant un organe d'appui accessible par un utilisateur, une face d'appui coopérant avec le composant de détection d'une poussée exercée sur le bouton poussoir et un bras qui relie l'organe d'appui à la face d'appui, caractérisé en ce que ladite couronne comporte une patte qui s'étend radialement à l'axe Δ et qui entraine l'arbre mobile en rotation autour de l'axe Δ et en ce que le bouton poussoir est mobile uniquement en translation le long de l'axe Δ, la patte et le bras étant dimensionnés pour obtenir une course angulaire de la couronne supérieure à 180°, de préférence supérieure à 250°.

Ainsi, le bouton poussoir n'est pas entrainé en rotation lorsque la couronne est manœuvrée. Un marquage réalisé sur le bouton poussoir, reste donc immobile et lisible quelle que soit la position de la couronne.

Dans une telle construction où le bras limite la course angulaire de la patte dans sa rotation autour de l'axe Δ, il est évident que la course angulaire de la couronne sera inférieure à 360°.

La couronne et la patte forment une seule pièce monobloc pour entrainer le composant de détection d'une position angulaire. Une telle construction est particulièrement économique.

Avantageusement, le composant de détection d'une position angulaire de la couronne est un potentiomètre.

Un potentiomètre comporte une course utile de de travail autour de 270°. Ainsi, la course angulaire de la couronne permet d'accéder à toute la course utile de travail du potentiomètre.

De préférence, le composant de détection d'une poussée exercée sur le bouton poussoir est un micro interrupteur.

Un potentiomètre et un micro interrupteur sont des composants standards, disponibles dans le commerce et particulièrement économiques.

Avantageusement, l'organe d'appui, le bras et la face d'appui forment une seule pièce monobloc.

Une telle construction du bouton poussoir en une seule pièce est particulièrement économique.

De manière avantageuse, le bras s'étend le long d'une paroi interne de la couronne.

Une telle disposition permet de minimiser une limitation de la course angulaire de la couronne.

De préférence, le dispositif de commande comporte un circuit électronique sur lequel sont implantés le composant de détection d'une position angulaire de la couronne et le composant de détection d'une poussée exercée sur le bouton poussoir, le circuit électronique étant agencé perpendiculairement à l'axe Δ.

Avantageusement, le bouton poussoir comporte au moins une languette agencée de manière coulissante selon l'axe Δ dans au moins une ouverture traversante réalisée dans le circuit électronique.

Ainsi, le bouton poussoir ne comporte qu'un degré de liberté : une translation selon l'axe Δ.

De préférence, le bouton poussoir comporte deux languettes agencées de manière coulissante dans deux ouvertures traversantes réalisées dans le circuit électronique, les deux ouvertures traversantes étant agencées de part et d'autre du composant de détection d'une poussée exercée sur le bouton poussoir.

De manière avantageuse, les languettes sont agencées sur la face d'appui coopérant avec le composant de détection d'une poussée exercée sur le bouton poussoir.

De préférence, l'organe d'appui, le bras, la face d'appui et les deux languettes forment une seule pièce monobloc.

Avantageusement, l'appareil électroménager comporte un bâti comprenant un orifice traversant, la couronne étant mobile en rotation dans l'orifice traversant.

Ainsi, la couronne est guidée en rotation sans pièce spécifique ajoutée.

De préférence, le bâti comporte une face interne, la couronne comprenant une bordure périphérique qui coopère avec la face interne.

Avantageusement, l'appareil électroménager est un grille-pain.

De préférence, le circuit électronique commande le degré de grillage du pain en fonction des signaux fournis par le composant de détection d'une position angulaire de la couronne.

De préférence, le circuit électronique commande l'arrêt d'un cycle de grillage en fonction du signal fourni par le composant de détection d'une poussée exercée sur le bouton poussoir

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'un appareil électroménager formé par un grille-pain selon un mode particulier de réalisation de l'invention,
La figure 2 est une vue en coupe partielle suivant le plan de coupe II d'un bâti et d'un dispositif de commande de l'appareil électroménager illustré à la figure 1,
La figure 3 est une vue en perspective éclatée du dispositif de commande de l'appareil électroménager illustré à la figure 2,
La figure 4 est une vue selon la direction IV d'une couronne et d'un bouton poussoir du dispositif de commande illustré à la figure 2, la couronne étant dans une position angulaire correspondant au degré de grillage minimum,
La figure 5 est une vue selon la direction IV de la couronne et du bouton poussoir du dispositif de commande illustré à la figure 2, la couronne étant dans une position angulaire correspondant au degré de grillage maximum.

On notera que, dans ce document, les termes «horizontal», «vertical», «inférieur», «supérieur», «longitudinal», «transversal», «haut», «bas», employés pour décrire l'appareil électroménager, notamment un grille-pain, font référence à cet appareil électroménager en situation d'usage, lorsqu'il est posé sur un plan horizontal.

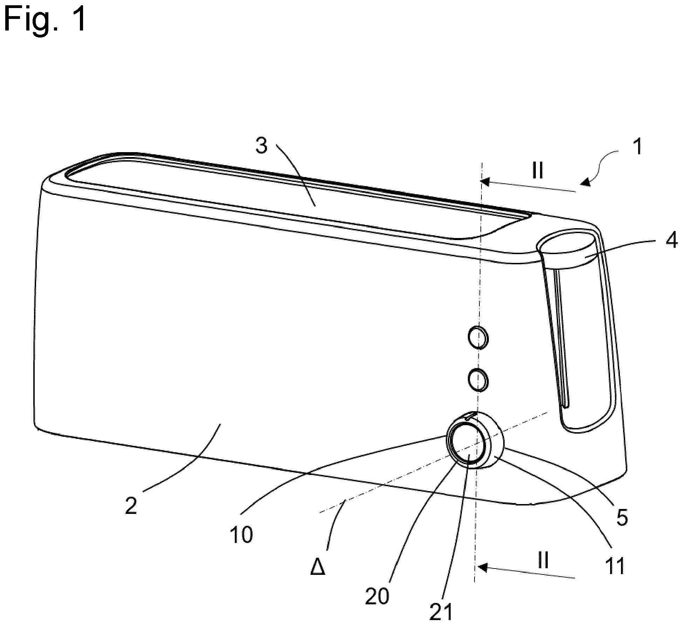

Tel que visible aux figures 1 à 3, un appareil électroménager formé par un grille-pain 1 comprend un bâti 2 à l'intérieur duquel est agencée une chambre de grillage 3. La chambre de grillage 3 comporte des éléments chauffants et un chariot porte pain (non illustrés sur les figures). Le chariot porte pain est mobile en translation verticale sous l'action d'un bouton de manœuvre 4 entre une position haute de chargement du pain et une position basse de grillage du pain. Le grille-pain 1 comporte un dispositif de commande 10 qui comprend un électroaimant (non illustré sur les figures) permettant le maintien du chariot porte pain en position basse de grillage du pain.

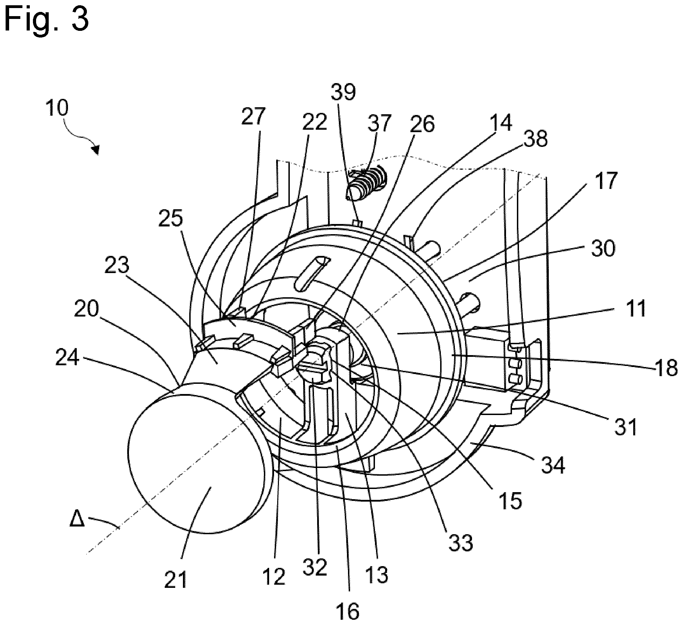

Le dispositif de commande 10 comporte une couronne 11 mobile en rotation dans un orifice traversant 5 réalisé dans le bâti 2, la couronne 11 étant mobile en rotation autour d'un axe Δ. La couronne 11 agit sur un composant de détection d'une position angulaire 31 formé par un potentiomètre. Le potentiomètre 31 est muni d'un arbre 32 mobile en rotation autour de l'axe Δ. L'axe Δ de rotation de la couronne 11 et l'axe Δ de rotation de l'arbre 32 du potentiomètre 31 sont ainsi confondus. La couronne 11 comporte une paroi interne 12 depuis laquelle une patte 13 s'étend radialement à l'axe Δ. La patte 13 comporte une extrémité libre 14 munie d'un logement 15 destiné à coopérer avec l'arbre 32 du potentiomètre 31 qui comporte un méplat 33 (Fig.3). Le logement 15 présente une forme complémentaire à la forme de l'arbre 32 muni du méplat 33.

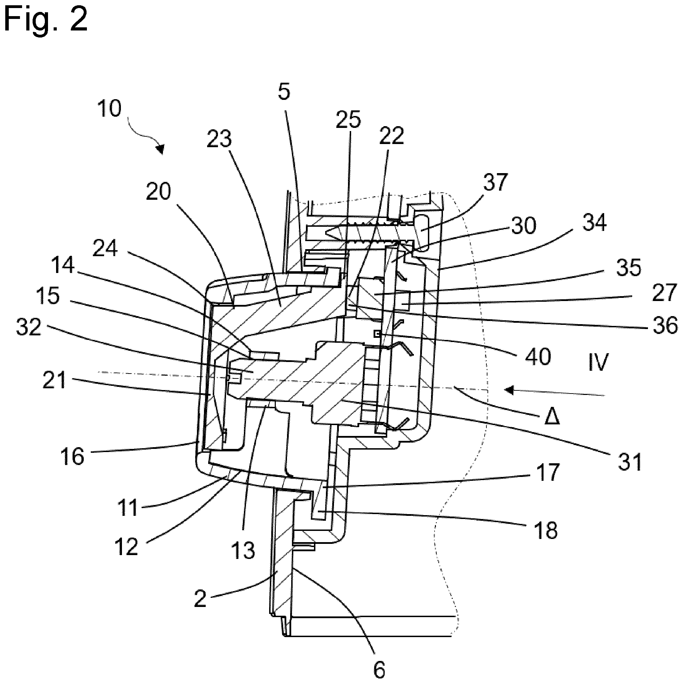

Le dispositif de commande 10 comporte un bouton poussoir 20 qui est mobile en translation le long de l'axe Δ et qui est agencé dans la couronne 11. Le bouton poussoir 20 coopère avec un composant de détection d'une poussée exercée sur le bouton poussoir 20 formé par un micro interrupteur (Fig.2). Le micro interrupteur 35 comporte un actionneur 36 monté sur ressort. Le bouton poussoir 20 comporte un organe d'appui 21 prenant la forme d'un disque agencé dans une extrémité externe 16 de la couronne 11. L'extrémité externe 16 est appelée ainsi car elle est située à l'extérieur du bâti 2. L'organe d'appui 21 est ainsi facilement accessible par un utilisateur. Le bouton poussoir 20 comporte une face d'appui 22 qui agit en cas de poussée sur le bouton poussoir 20 sur l'actionneur 36 du micro interrupteur 35. Le bouton poussoir 20 comporte un bras 23 qui relie l'organe d'appui 21 à la face d'appui 22. Le bras 23 s'étend depuis l'organe d'appui 21, notamment depuis une bordure 24, le long de la paroi interne 12 de la couronne 11. Le bras 23 présente une section transversale légèrement en retrait de la paroi interne 12 de la couronne 11. Dans ce mode de réalisation, le bras 23 présente une section transversale en arc de cercle de rayon légèrement inférieur au rayon de la couronne 11. Une collerette 25 s'étend depuis le bras 23 perpendiculairement à l'axe Δ vers l'extérieur pour former la face d'appui 22.

Le dispositif de commande 10 comporte un circuit électronique 30 sur lequel sont assemblés le potentiomètre 31 et le micro interrupteur 35. Le circuit électronique 30 est agencé dans un boitier 34 qui est fixé sur une face interne 6 du bâti 2 par au moins une vis 37 (Fig.2). La couronne 11 comporte une extrémité interne 17 qui est munie d'une bordure périphérique 18. L'extrémité interne 17 est appelée ainsi car elle est située à l'intérieur du bâti 2. La bordure périphérique 18 s'étend radialement à l'axe Δ, vers l'extérieur de la couronne 11. La couronne 11 est maintenue en position le long de l'axe Δ par la bordure périphérique 18 qui est agencée entre la face interne 6 du bâti 2 et le boitier 34.

La face d'appui 22 du bouton poussoir 20 comporte deux languettes 26, 27 qui s'étendent le long de l'axe Δ. Les languettes 26, 27 sont identiques et présentent une section transversale à l'axe Δ de préférence rectangulaire. Les deux languettes 26, 27 sont agencées de manière coulissante dans deux ouvertures traversantes 38, 39 réalisées dans le circuit électronique 30. Les deux ouvertures traversantes 38, 39 sont de forme complémentaire à la forme des languettes 26, 27. Les deux ouvertures traversantes 38, 39 sont agencées de part et d'autre du micro interrupteur 35. Ainsi, le bouton poussoir 20 ne comporte qu'un degré de liberté : une translation selon l'axe Δ. Le bouton poussoir 20 est maintenu en position le long de l'axe Δ par la collerette 25 du bras 23 qui coopère avec la bordure périphérique 18 de la couronne 11 et la face d'appui 22 qui coopère avec l'actionneur 36 du micro interrupteur 35.

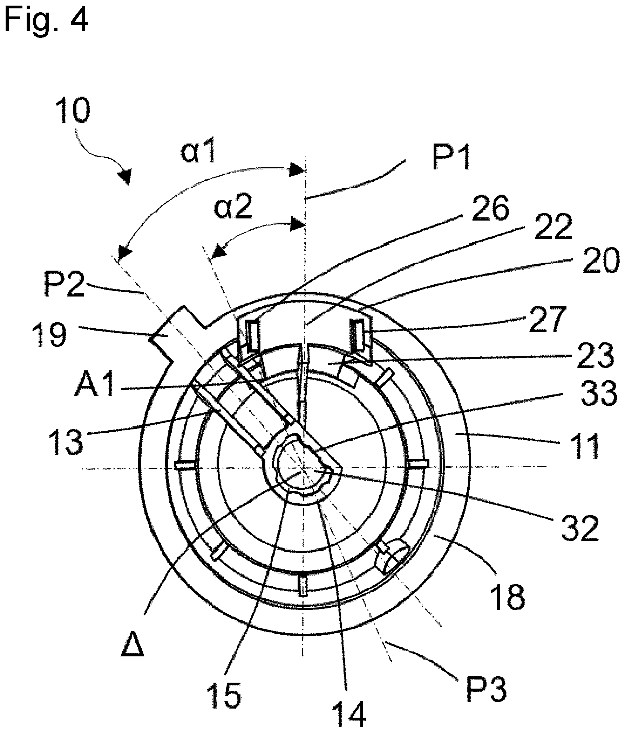

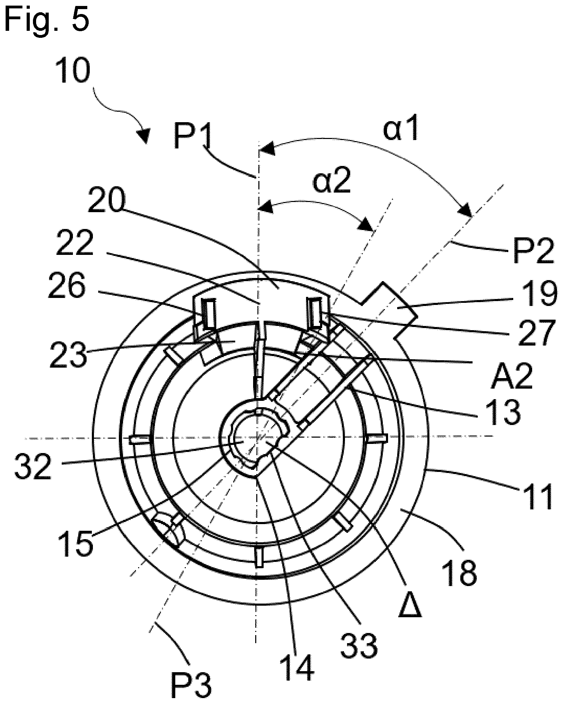

Tel que visible aux figures 4 et 5, la couronne 11 est mobile entre une position angulaire correspondant à un réglage minimum (Fig.4), notamment d'un degré de grillage, et une position angulaire correspondant à un réglage maximum (Fig.5). La bordure périphérique 18 de la couronne 11 comporte une excroissance 19 qui coopère avec une butée fixe (non représentées sur les figures) agencée sur le bâti 2 pour définir les positions angulaires correspondant à un réglage minimum et un réglage maximum. L'excroissance 19 et la butée fixe supportent seules les efforts appliqués par l'utilisateur lors des différents réglages extrêmes. Ainsi, la patte 13, le bras 23 et le potentiomètre 31 sont préservés.

Le bras 23 comporte un plan P1 de symétrie, vertical et passant par l'axe Δ. La patte 13 comporte un plan P2 de symétrie passant par l'axe Δ et tournant avec la couronne 11. Lorsque la couronne 11 occupe la position angulaire correspondant à un réglage minimum (Fig.4), la patte 13 est proche du bras 23, à proximité immédiate d'un point A1 du bras 23. Le plan P1 et le plan P2 forment alors un angle a1 égal à 45°. Lorsque la couronne 11 occupe la position angulaire correspondant à un réglage maximum (Fig. 5), la patte 13 est proche du bras 23, à proximité immédiate d'un point A2 du bras 23. Le plan P1 et le plan P2 forment alors un angle a1 égal à 45°. La course angulaire de la couronne 11 est donc limitée par la patte 13 et le bras 23 d'une valeur angulaire de 2 x 45° = 90°. La course angulaire de la couronne 11 est donc de : 360°- 90° = 270°.

Un plan P3 passant par le point A1 ou A2 et l'axe Δ forme un angle a2 avec le plan P1 égal à 30°. La course angulaire de la couronne 11 est donc limitée par le bras 23 d'une valeur angulaire de 2x30° = 60° et par la patte 13 d'une valeur angulaire de 90° - 60° = 30°.

Le circuit électronique 30 commande le degré de grillage du pain en fonction des signaux fournis par le potentiomètre 31 qui détecte la position angulaire de la couronne 11. Le circuit électronique 30 commande l'arrêt d'un cycle de grillage en fonction du signal fourni par le micro interrupteur 35 lorsqu'une poussée est exercée sur le bouton poussoir 20. La face d'appui 22 peut comporter un pictogramme ou un marquage horizontal, par exemple « STOP » (non illustré sur les figures) qui ne bouge pas et reste lisible, quelle que soit la position angulaire de la couronne 11.

Dans une première variante de réalisation, le bouton poussoir 20 est réalisé en une matière translucide et le circuit électronique 30 comporte une diode électroluminescente 40 qui permet d'éclairer l'organe d'appui 21 pendant un cycle de grillage.

Dans une deuxième variante de réalisation, le bouton poussoir 20 est réalisé en une matière translucide, et une diode électroluminescente pilotée par le circuit électronique 30 est fixée dans la couronne 11 ou dans le bouton poussoir 20 et permet d'éclairer l'organe d'appui 21 pendant un cycle de grillage.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une première variante de réalisation, le potentiomètre comporte un arbre creux comprenant un logement muni d'un méplat. La patte 13 comporte une extrémité libre munie d'une tige qui s'étend le long de l'axe Δ et qui est destinée à coopérer avec le logement de l'arbre du potentiomètre. La tige présente une forme complémentaire à la forme du logement.

Dans une deuxième variante de réalisation, le degré de liberté en rotation du bouton poussoir 20 est supprimé par une liaison coulissante le long de l'axe Δ entre le bouton poussoir 20 et le bâti 2, ou entre le bouton poussoir 20 et une pièce fixée directement ou indirectement au bâti 2.

## Revendications

1. Appareil électroménager (1) comprenant un dispositif de commande (10) comportant une couronne (11) mobile en rotation autour d'un axe Δ, un bouton poussoir (20) qui est mobile le long de l'axe Δ et qui est agencé dans la couronne (11), un composant de détection d'une position angulaire (31) de la couronne (11) muni d'un arbre (32) mobile en rotation et un composant de détection d'une poussée exercée sur le bouton poussoir (20), ledit bouton poussoir (20) comportant un organe d'appui (21) accessible par un utilisateur, une face d'appui (22) coopérant avec le composant de détection d'une poussée exercée sur le bouton poussoir (20) et un bras (23) qui relie l'organe d'appui (21) à la face d'appui (22), **caractérisé en ce que** ladite couronne (11) comporte une patte (13) qui s'étend radialement à l'axe Δ et qui entraine l'arbre (32) mobile en rotation autour de l'axe Δ et **en ce que** le bouton poussoir (20) est mobile uniquement en translation le long de l'axe Δ, la patte (13) et le bras (23) étant dimensionnés pour obtenir une course angulaire de la couronne (11) supérieure à 180°, de préférence supérieure à 250°.

2. Appareil électroménager (1) selon la revendication 1, **caractérisé en ce que** le composant de détection d'une position angulaire de la couronne (11) est un potentiomètre (31).

3. Appareil électroménager (1) selon l'une quelconque des revendications 1 à 2, **caractérisé en ce que** le composant de détection d'une poussée exercée sur le bouton poussoir (20) est un micro interrupteur (35).

4. Appareil électroménager (1) selon l'une quelconque des revendications 1 à 3, **caractérisé en ce que** l'organe d'appui (21), le bras (23) et la face d'appui (22) forment une seule pièce monobloc.

5. Appareil électroménager (1) selon l'une quelconque des revendications 1 à 4, **caractérisé en ce que** le bras (23) s'étend le long d'une paroi interne (12) de la couronne (11).

6. Appareil électroménager (1) selon l'une quelconque des revendications 1 à 5, **caractérisé en ce que** le dispositif de commande (10) comporte un circuit électronique (30) sur lequel sont implantés le composant de détection d'une position angulaire (31) de la couronne (11) et le composant de détection d'une poussée exercée sur le bouton poussoir (20), le circuit électronique (30) étant agencé perpendiculairement à l'axe Δ.

7. Appareil électroménager (1) selon la revendication 6, **caractérisé en ce que** le bouton poussoir (20) comporte au moins une languette (26, 27) agencée de manière coulissante selon l'axe Δ dans au moins une ouverture traversante (38, 39) réalisée dans le circuit électronique (30).

8. Appareil électroménager (1) selon l'une quelconque des revendications 6 à 7, **caractérisé en ce que** le bouton poussoir (20) comporte deux languettes (26, 27) agencées de manière coulissante dans deux ouvertures traversantes (38, 39) réalisées dans le circuit électronique (30), les deux ouvertures traversantes (38, 39) étant agencées de part et d'autre du composant de détection d'une poussée exercée sur le bouton poussoir (20).

9. Appareil électroménager (1) selon l'une quelconque des revendications 1 à 8, **caractérisé en ce qu'**il comporte un bâti (2) comprenant un orifice traversant (5), la couronne (11) étant mobile en rotation dans l'orifice traversant (5).

10. Appareil électroménager (1) selon la revendication 9, **caractérisé en ce que** le bâti (2) comporte une face interne (6), la couronne (11) comprenant une bordure périphérique (18) qui coopère avec la face interne (6).

11. Appareil électroménager (1) selon l'une quelconque des revendications 1 à 10, **caractérisé en ce qu'**il est un grille-pain.

12. Appareil électroménager (1) selon la revendication 11, **caractérisé en ce que** le circuit électronique (30) commande le degré de grillage du pain en fonction des signaux fournis par le composant de détection d'une position angulaire (31) de la couronne (11).

13. Appareil électroménager (1) selon l'une quelconque des revendications 11 à 12, **caractérisé en ce que** le circuit électronique (30) commande l'arrêt d'un cycle de grillage en fonction du signal fourni par le composant de détection d'une poussée exercée sur le bouton poussoir (20).

## Patentansprüche

1. Haushaltsgerät (1), umfassend eine Steuervorrichtung (10), die eine um eine Achse Δ drehbare Krone (11), einen in der Krone (11) angeordneten, entlang der Achse Δ beweglichen Druckknopf (20), ein mit einer drehbaren Welle (32) versehenes Bauteil zur Erfassung einer Winkelposition (31) der Krone (11) und ein Bauteil zur Erfassung eines auf den Druckknopf (20) ausgeübten Drucks umfasst, wobei der Druckknopf (20) ein für einen Benutzer zugängliches Auflageelement (21), eine Auflagefläche (22), die mit dem Bauteil zur Erfassung eines auf den Druckknopf (20) ausgeübten Drucks zusammenwirkt, und einen Arm (23) umfasst, der das Auflageelement (21) mit der Auflagefläche (22) verbindet, **dadurch gekennzeichnet, dass** die Krone (11) eine Lasche (13) umfasst, die sich radial zur Achse Δ erstreckt und die die Welle (32) drehbar um die Achse Δ antreibt, und dass der Druckknopf (20) nur entlang der Achse Δ verschiebbar ist, wobei die Lasche (13) und der Arm (23) so bemessen sind, dass ein Winkelweg der Krone (11) von mehr als 180° und vorzugsweise mehr als 250° erreicht wird.

2. Haushaltsgerät (1) nach Anspruch 1, **dadurch gekennzeichnet, dass** das Bauteil zur Erfassung einer Winkelposition der Krone (11) ein Potentiometer (31) ist.

3. Haushaltsgerät (1) nach einem der Ansprüche 1 bis 2, **dadurch gekennzeichnet, dass** das Bauteil zur Erfassung eines auf den Druckknopf (20) ausgeübten Drucks ein Mikroschalter (35) ist.

4. Haushaltsgerät (1) nach einem der Ansprüche 1 bis 3, **dadurch gekennzeichnet, dass** das Auflageelement (21), der Arm (23) und die Auflagefläche (22) ein einziges einstückig ausgebildetes Teil bilden.

5. Haushaltsgerät (1) nach einem der Ansprüche 1 bis 4, **dadurch gekennzeichnet, dass** sich der Arm (23) entlang einer Innenwand (12) der Krone (11) erstreckt.

6. Haushaltsgerät (1) nach einem der Ansprüche 1 bis 5, **dadurch gekennzeichnet, dass** die Steuervorrichtung (10) eine elektronische Schaltung (30) umfasst, auf der das Bauteil zur Erfassung einer Winkelposition (31) der Krone (11) und das Bauteil zur Erfassung eines auf den Druckknopf (20) ausgeübten Drucks implantiert sind, wobei die elektronische Schaltung (30) senkrecht zur Achse Δ angeordnet ist.

7. Haushaltsgerät (1) nach Anspruch 6, **dadurch gekennzeichnet, dass** der Druckknopf (20) mindestens eine Zunge (26, 27) umfasst, die entlang der Achse Δ in mindestens einer in der elektronischen Schaltung (30) ausgebildeten Durchgangsöffnung (38, 39) verschiebbar angeordnet ist.

8. Haushaltsgerät (1) nach einem der Ansprüche 6 bis 7, **dadurch gekennzeichnet, dass** der Druckknopf (20) zwei Zungen (26, 27) umfasst, die in zwei in der elektronischen Schaltung (30) ausgebildeten Durchgangsöffnungen (38, 39) verschiebbar angeordnet sind, wobei die beiden Durchgangsöffnungen (38, 39) auf beiden Seiten des Bauteils zur Erfassung eines auf den Druckknopf (20) ausgeübten Drucks angeordnet sind.

9. Haushaltsgerät (1) nach einem der Ansprüche 1 bis 8, **dadurch gekennzeichnet, dass** es einen Rahmen (2) mit einer Durchgangsbohrung (5) umfasst, wobei die Krone (11) in der Durchgangsbohrung (5) drehbar ist.

10. Haushaltsgerät (1) nach Anspruch 9, **dadurch gekennzeichnet, dass** der Rahmen (2) eine Innenfläche (6) umfasst, wobei die Krone (11) einen Umfangsrand (18) umfasst, der mit der Innenfläche (6) zusammenwirkt.

11. Haushaltsgerät (1) nach einem der Ansprüche 1 bis 10, **dadurch gekennzeichnet, dass** es ein Toaster ist.

12. Haushaltsgerät (1) nach Anspruch 11, **dadurch gekennzeichnet, dass** die elektronische Schaltung (30) den Toastgrad des Brotes in Abhängigkeit von den Signalen steuert, die von dem Bauteil zur Erfassung einer Winkelposition (31) der Krone (11) geliefert werden.

13. Haushaltsgerät (1) nach einem der Ansprüche 11 bis 12, **dadurch gekennzeichnet, dass** die elektronische Schaltung (30) das Anhalten eines Toastzyklus in Abhängigkeit von dem Signal steuert, das von dem Bauteil zur Erfassung eines auf den Druckknopf (20) ausgeübten Drucks geliefert wird.

## Claims

1. Household appliance (1) comprising a control device (10) including a ring (11) that can rotate about an axis Δ, a push-button (20) that can move along the axis Δ and that is arranged in the ring (11), a component for detecting an angular position (31) of the ring (11) provided with a rotatable shaft (32) and a component for detecting a thrust applied to the push-button (20), said push-button (20) including a support member (21) that can be accessed by a user, a support surface (22) that cooperates with the component for detecting a thrust applied to the push-button (20) and an arm (23) that connects the support member (21) to the support surface (22), **characterised in that** said ring (11) comprises a lug (13) that extends radially along the axis Δ and that drives the shaft (32) to rotate about the axis Δ and **in that** the push-button (20) only moves in translation along the axis Δ, the lug (13) and the arm (23) being sized in order to obtain an angular stroke of the ring (11) greater than 180°, preferably greater than 250°.

2. Household appliance (1) according to claim 1, **characterised in that** the component for detecting an angular position of the ring (11) is a potentiometer (31).

3. Household appliance (1) according to any of claims 1 to 2, **characterised in that** the component for detecting a thrust applied to the push-button (20) is a micro-switch (35).

4. Household appliance (1) according to any of claims 1 to 3, **characterised in that** the support member (21), the arm (23) and the support surface (22) form one monoblock piece.

5. Household appliance (1) according to any of claims 1 to 4, **characterised in that** the arm (23) extends along an inner wall (12) of the ring (11).

6. Household appliance (1) according to any of claims 1 to 5, **characterised in that** the control device (10) comprises an electronic circuit (30) on which the component for detecting an angular position (31) of the ring (11) and the component for detecting a thrust applied to the push-button (20) are installed, the electronic circuit (30) being arranged perpendicularly to the axis Δ.

7. Household appliance (1) according to claim 6, **characterised in that** the push-button (20) comprises at least one tab (26, 27) arranged to slide according to the axis Δ in at least one through-opening (38, 39) made in the electronic circuit (30).

8. Household appliance (1) according to any of claims 6 to 7, **characterised in that** the push-button (20) comprises two tabs (26, 27) arranged to slide in two through-openings (38, 39) made in the electronic circuit (30), the two through-openings (38, 39) being arranged on either side of the component for detecting a thrust applied to the push-button (20).

9. Household appliance (1) according to any of claims 1 to 8, **characterised in that** it comprises a frame (2) comprising a through-orifice (5), the ring (11) being able to rotate in the through-orifice (5).

10. Household appliance (1) according to claim 9, **characterised in that** the frame (2) comprises an inner surface (6), the ring (11) comprising a peripheral edge (18) that cooperates with the inner surface (6).

11. Household appliance (1) according to any of claims 1 to 10, **characterised in that** it is a toaster.

12. Household appliance (1) according to claim 11, **characterised in that** the electronic circuit (30) controls the degree of toasting of the bread according to the signals provided by the component for detecting an angular position (31) of the ring (11).

13. Household appliance (1) according to any of claims 11 to 12, **characterised in that** the electronic circuit (30) controls the stopping of a toasting cycle according to the signal provided by the component for detecting a thrust applied to the push-button (20).
